# DEMANDE DE BREVET EUROPEEN

(11) **EP 3 786 001 A1**
(43) Date de publication de la demande: **03.03.2021**
(21) Numéro de dépôt: 20192578.1
(22) Date de dépôt: 25.08.2020
(51) Int. Cl.: B60R 19/44, B60J 11/06

(54) **DISPOSITIF DE PROTECTION AMOVIBLE POUR LE PARE-CHOCS D'UN VÉHICULE**

(30) Priorité: 28.08.2019 FR 1909464
(71) Demandeur: Grandovec, Benoît, 33530 Bassens (FR)
(72) Inventeur: Grandovec, Benoît, 33530 Bassens (FR)
(74) Mandataire: Aquinov

(57) **Abrégé**

[Dispositif de protection d'un véhicule V, notamment d'une voiture comportant un tablier central (12) et deux appendices (16) liés chacun audit tablier central (12) par une charnière (16-1).

## Description

L'invention concerne un dispositif de protection amovible d'un véhicule contre les chocs, notamment d'une voiture.

Les véhicules sont amenés à circuler en ville et notamment à être garés dans des lieux publics ou privés, payants ou gratuits. Ces parkings, qu'ils soient publics ou privés disposent de places dimensionnées pour permettre de garer des véhicules de dimensions standards. Dans les parkings gratuits, le but reste de garer le plus possible de véhicules et dans les parkings payants, la rentabilité est directement proportionnelle au nombre de véhicules garés donc au nombre de places, ce qui incite également à densifier les emplacements de véhicules. Les dimensions des emplacements se trouvent donc limitées en dimensions, au strict minimum nécessaire. Comme chacun le constate, les véhicules ont des dimensions variables et certains véhicules utilitaires, certains véhicules du type tout terrain, ont des dimensions réellement plus importantes que certains véhicules plus citadins. Du fait de ces disparités de dimensions, les manœuvres pour garer un véhicule entre deux autres par exemple, peuvent s'avérer plus délicates dans certains cas. De même, en fonction de la dextérité du chauffeur, les manœuvres peuvent être plus ou moins approximatives. Il existe bien sûr des moyens pour prévenir les contacts et notamment des radars avant et arrière mais le fait est que tous les véhicules n'en sont pas nécessairement dotés, ces radars peuvent être en panne et surtout les chauffeurs peuvent ne pas en tenir compte. De même, les attelages de remorque montés à l'arrière d'un véhicule ne sont pas toujours détectés, ou sont souvent détectés en permanence, si bien que le chauffeur désactive ladite détection avec pour conséquence, la désactivation des avertisseurs lumineux et/ou sonores pendant la manœuvre.

On constate, de façon générale, que les véhicules sont souvent dégradés, au droit des pare-chocs lorsqu'ils sont à l'arrêt et immobiles, par des véhicules conduits par des chauffeurs peu attentifs, des chauffeurs possédant des véhicules qui ne leur appartiennent pas, ou des chauffeurs ayant des véhicules eux-mêmes dégradés et ne courant aucun risque ou encore par simple inattention.

Il existe donc des protections des véhicules, au droit des pare-chocs, constituées de matériaux amortisseurs, comme des élastomères, équipés de moyens de montage amovible sur les pare-chocs afin d'assurer une protection sur l'avant et/ou l'arrière ainsi que sur au moins une partie des côtés du véhicule, adjacents auxdits pare-chocs. De telles protections commercialisées sont constituées de dispositifs à sangles de façon à permettre le réglage de la longueur du dispositif et de fait une adaptation à la largeur du véhicule.

Latéralement, des volets rabattables sur les ailes de la carrosserie sont prévus, ces volets étant munis de fixations démontables sur les bords des passages de roues, par exemple des crochets avec des moyens élastiques de liaison. Le supportage de la protection verticalement est réalisée par des sangles, dont une des extrémités de chaque sangle porte une butée, lesdites butées étant rapportées dans le coffre qui, une fois fermé, retient lesdites butées et interdit à la protection de tomber verticalement et de plus, interdit le vol. La longueur des sangles est réglable de façon à placer la protection à la hauteur souhaitée verticalement pour protéger la zone souhaitée. On sait que la demande de ce type de protection est importante car de nombreux propriétaires sont soigneux et/ou possèdent un véhicule avec une peinture personnalisée de grande qualité artistique par exemple, et/ ou encore souhaitent tout simplement conserver leurs véhicules en parfait état pour une vente ultérieure.

De telles protections sont efficaces et rapides à mettre en place une fois réglées. Néanmoins, celles qui sont actuellement commercialisées présentent de nombreux inconvénients. Le premier est un réglage complexe à partir de sangles, si bien que le produit final est encombrant et surtout d'un prix de revient élevé lié à une conception technique complexe. Le dispositif est encombrant car il est d'une seule pièce sur toute la largeur du véhicule, surtout avec les volets latéraux. La partie centrale, monolithique, semi-rigide et correspondant à la largeur du véhicule est encombrante car il faut pouvoir loger ladite protection dans le coffre du véhicule lorsque celle-ci ne présente pas d'utilité et, dans tous les cas, durant les phases de roulage du véhicule, de façon à laisser au coffre au moins une partie de sa fonction première qui est celle de recevoir des objets à transporter.

Le but du dispositif de protection de véhicules selon la présente invention, notamment au droit des pare-chocs de véhicules, est de permettre un réglage aisé de la largeur afin de pouvoir l'adapter sur le véhicule d'un propriétaire lors de la première mise en service, mais aussi à chaque usage, ou à un ou plusieurs véhicules d'un même propriétaire. Un autre but est celui de réduire l'encombrement du dispositif lorsqu'il n'est pas en service et qu'il doit être rangé dans le coffre du véhicule destiné à être protégé ou encore lorsque le dispositif doit être stocké chez le revendeur ou même chez le propriétaire en cas de non-usage.

La présente invention est maintenant décrite à l'aide d'exemples uniquement illustratifs et nullement limitatifs de la portée de l'invention, ceci à partir des illustrations jointes, sur lesquelles :
[Fig. 1] représente une vue du dispositif monté à l'arrière d'un véhicule V.
[Fig. 2] représente une vue du dispositif selon la présente invention, en position de largeur minimale.
[Fig. 3] représente une vue du dispositif selon la présente invention, en position de largeur maximale.
[Fig. 4] représente une vue du dispositif plié.

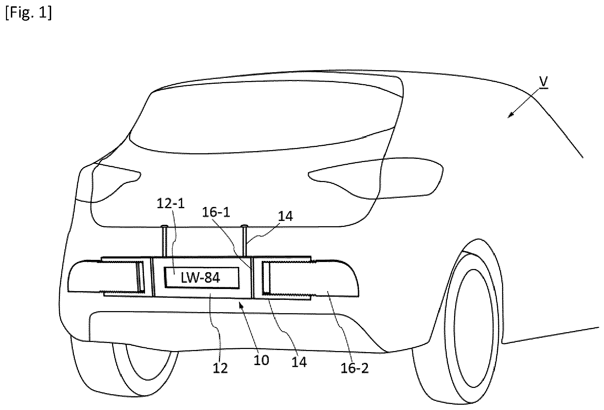

Le dispositif de protection selon la présente invention est illustré dans sa version simple, sur les figures 1, 2 et 3. Pour des raisons de simplification, la description est focalisée sur une protection arrière d'un véhicule V avec des pare-chocs mais le dispositif trouve application également sur l'avant dudit véhicule, seuls les réglages pouvant varier. On entend par pare-choc toute partie plus ou moins proéminente avant et arrière. En effet, les pare-chocs sont maintenant intégrés dans la carrosserie et en constituent une continuité, les éléments de sécurité passive étant intégrés derrière cette zone, le terme pare-choc continuant à être utilisé pour définir cette zone.

Le dispositif de protection 10 selon la présente invention comprend un tablier central 12. Ce tablier central 12 est réalisé en un matériau élastomère, plus ou moins chargé, destiné à absorber les chocs et à subir des frottements importants. Le matériau doit présenter une cohésion suffisante pour éviter l'arrachement lors des frottements. Ce tablier central 12 est muni de moyens de fixation 14 sur ledit véhicule. De tels moyens de fixation 14 comprennent généralement des sangles 14-1 de longueur réglable, solidaires par une extrémité 14-2 dudit tablier central 12 et comportant une butée 14-3 à l'autre extrémité libre de blocage desdites sangles. De façon avantageuse, les deux sangles 14-1 sont réparties en deux points distants pour assurer une stabilité horizontale et pour permettre un réglage du positionnement en hauteur dudit tablier central par rapport au pare-choc arrière ou avant du véhicule. Le tablier central 12 comprend une fenêtre 12-1, réalisée en un matériau transparent au droit de la surface de positionnement règlementaire de la plaque d'immatriculation. Suivant un mode de réalisation particulier, la totalité du tablier central 12 peut être réalisée en un élastomère transparent.

Selon la présente invention, ce tablier central 12 comporte, de part et d'autre, des appendices 16, solidaires dudit tablier central 12, chacun par une charnière 16-1. Le tablier et les appendices 16 sont avantageusement réalisés en un même matériau. Ces charnières 16-1 peuvent être un amincissement de matière, au droit de la ligne de pivotement de ladite charnière, venu de fabrication avec le tablier central, comme c'est le cas dans le mode de réalisation retenu. Ces charnières 16-1 permettent le repliement des appendices, en superposition sur le tablier central 12. Ces appendices 16 permettent de couvrir une largeur inférieure à la largeur standard d'un véhicule au gabarit routier. Ces appendices 16 peuvent donc se replier grâce aux charnières 16-1 sur le tablier central, en superposition, en deux épaisseurs. Des moyens de retenue en position repliée des appendices 16 par rapport au tablier central 12 peuvent être prévus sous forme de pressions par exemple ou de languettes de verrouillage afin que les appendices restent en position repliée sur le tablier central, supprimant les effets rémanents de rappel en position ouverte, liés au matériau et au fait que les charnières sont élastiques, dans ce mode de réalisation.

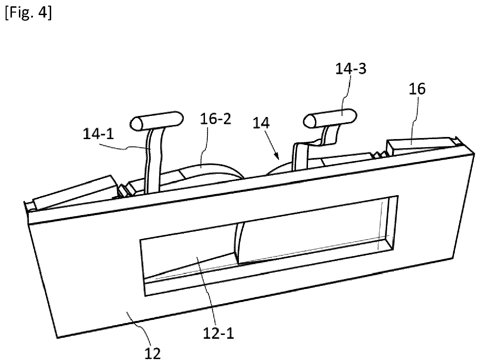

Dans une variante avantageuse, chaque appendice 16 comprend une rallonge 16-2 et des moyens de réglage 16-3 en translation par rapport audit appendice 16, en l'occurrence des moyens de réglage en translation suivant l'axe longitudinal du tablier central 12, c'est-à-dire encore, suivant l'axe transversal du véhicule V. Ceci permet une adaptation à la largeur du véhicule, voire au-delà, de façon à couvrir les ailes. Dans un premier mode de réalisation, comme montré sur la figure 4, ces moyens de réglage 16-3 comportent des gouttières 16-4 haute et basse, avec des crans 16-5, solidaires de chaque appendice 16. Chaque rallonge 16-2 est montée coulissante dans ces gouttières et porte également sur ses bords des crans 16-6 de profil conjugué des crans des gouttières. Les crans sont ajustés de façon à permettre une translation moyennant un effort de traction suivant l'axe longitudinal et un maintien en position lorsqu'aucun effort n'est exercé. Chaque rallonge 16-2 est souple et peut être repliée contre les faces extérieures des ailes du véhicule et est équipée avantageusement de moyens de fixation amovible sur les passages de roues, ceci de façon connue, par exemple sous forme de crochets. De façon perfectionnée, les rallonges comportent des limiteurs d'extension, non représentées, pour interdire l'extension au-delà d'une longueur donnée afin d'éviter tout dégagement intempestif desdites rallonges par rapport aux appendices qui les portent.

Selon une variante, les crans sont supprimés, et chaque rallonge 16-2 coulisse librement dans les gouttières ménagées dans les appendices 16. Des moyens élastiques tels qu'au moins une sangle élastique, rappellent chaque rallonge vers l'appendice 16 qui la porte de façon à l'escamoter par superposition lorsque chaque rallonge 16-2 n'est pas utilisée et notamment lorsque la protection selon l'invention doit être rangée. Dans cette variante, les rallonges 16-2 peuvent porter directement des crochets destinés à coopérer avec les bords des passages de roues. Les moyens élastiques de rappel, tels qu'au moins une sangle élastique, assurent le maintien desdites rallonges 16-2 crochetées sur les passages de roue. On note que chaque rallonge 16-2 étant escamotée dans chaque appendice 16 correspondant, le repliage des appendices est possible et l'encombrement du dispositif de protection selon l'invention reste d'un encombrement limité.

Selon une autre variante, chaque appendice 16 comprend des moyens de réception d'une rallonge 16-2, les appendices portent des trous et les rallonges portent des crochets aptes à coopérer avec les trous. De façon avantageuse, des éléments élastiques avec des crochets pour se fixer dans les passages de roues permettent le maintien en place. Tout autre moyen de réception comme des oeillets avec des verrouillages par des taquets quart-tournants peuvent être utilisés. Dans ce cas, les rallonges sont réglées manuellement.

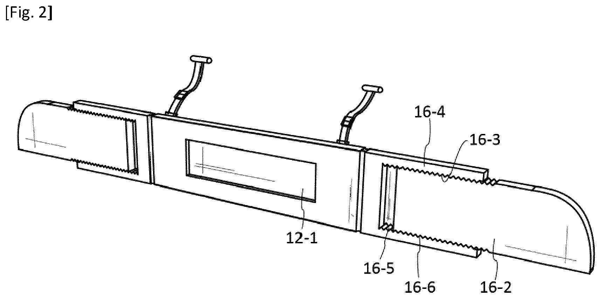

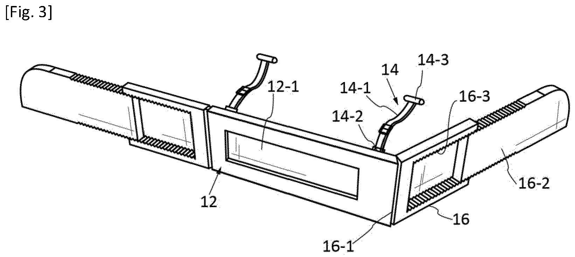

La mise en œuvre du dispositif est maintenant décrite et les avantages qui y sont liés apparaîtront clairement. Sur la figure 2, on constate que le dispositif, lorsque les deux appendices 16 sont repliés, est d'une largeur très limitée, celle du tablier central 12. En position dépliée des appendices, la largeur est inférieure à celle d'un véhicule standard au gabarit routier. Le réglage en largeur du dispositif, selon la présente invention, s'effectue de la façon suivante. L'utilisateur suspend le dispositif dans le coffre et ferme ledit coffre pour maintenir le tablier central suspendu. L'utilisateur tire ensuite sur chaque rallonge 16-2 et la rallonge se translate, guidée par les gouttières 16-4. Les crans 16-5 et 16-6 permettent un bon contrôle de cette translation et lorsque la traction cesse, la rallonge est maintenue en position translatée. La position maximale est représentée sur la figure 3. Dans cette position, les deux limiteurs d'extension des rallonges 16-2 évitent le désengagement hors des gouttières. Les rallonges 16-2 étant souples, elles peuvent se plier et se rabattre sur les côtés du véhicule afin de protéger cette partie de carrosserie. Des moyens de liaison associés aux rallonges, du type élastique et crochet, peuvent prendre attache sur les passages de roues arrière en l'occurrence. Le montage serait identique pour l'avant. Le blocage du tablier central est effectué sous le capot moteur et les opérations suivantes sont identiques.

Lorsque l'utilisateur souhaite réduire l'encombrement du dispositif, il replie les appendices 16 en faisant pivoter lesdits appendices autour des charnières 16-1 et lesdits deux appendices se superposent au tablier central 12, réduisant très sensiblement l'encombrement, voir figure 5. Les moyens de verrouillage maintiennent alors les appendices repliés. Si le tablier central 12 se trouvait avec les appendices 16 comportant les rallonges 16-2 en position étendue, il est nécessaire de rétracter préalablement lesdites rallonges, au moins partiellement. Ceci dépend bien entendu des dimensions des rallonges et du tablier central. En effet si la longueur de chaque appendice avec sa rallonge en position étendue est inférieure à la longueur du tablier central, il est possible de conserver le réglage et de replier chaque appendice, la superposition conduisant à 3 épaisseurs.

Dans le cas des variantes, en l'absence de crans, les rallonges 16-2 coulissent librement dans les gouttières des appendices 16. L'utilisateur suspend le tablier central 12 dans le coffre, ferme le coffre, le tablier central est alors suspendu. L'utilisateur exerce ensuite une traction sur chaque rallonge 16-2 qui coulisse dans l'appendice qui la porte et fixe les moyens de liaison aux passages de roues. Les moyens élastiques de rappel des rallonges 16-2 dans les appendices 16 assurent le maintien dans cette position. Les rallonges couvrent une partie de l'aile correspondante.

Le mode de réalisation présenté à titre d'exemple pourrait évoluer par exemple au niveau des charnières qui pourraient être réalisées en un matériau différent de celui du tablier central 12 et des appendices ou des rallonges. Ces produits bi matières, co-moulées par exemple, facilitent l'obtention des fonctions à réaliser. De même, les crans peuvent être remplacés par des matériaux ayant un coefficient de friction suffisant pour permettre une translation sous un effort de traction et un maintien en position en l'absence d'un effort de traction.

La mise en place du dispositif selon la présente invention permet de laisser la vision de la plaque d'immatriculation, protège l'arrière et l'avant du véhicule V, protège les côtés dudit véhicule sur l'arrière, au droit des ailes arrière. Le dispositif placé à l'avant offre les mêmes avantages et assure les mêmes protections sur l'avant. On note que la mise en place et le réglage sont très rapides pour un encombrement très réduit.

## Revendications

1. Dispositif de protection d'un véhicule V, notamment d'une voiture, **caractérisé en ce qu'**il comporte un tablier central (12) et deux appendices (16) liés chacun audit tablier central (12) par une charnière (16-1).

2. Dispositif de protection d'un véhicule, selon la revendication 1, **caractérisé en ce que** la charnière (16-1) consiste en un amincissement de matière, au droit de la ligne de pivotement de ladite charnière.

3. Dispositif de protection d'un véhicule, selon la revendication 1 ou 2, **caractérisé en ce que** chaque appendice (16) comprend des moyens de réception d'une rallonge (16-2).

4. Dispositif de protection d'un véhicule, selon la revendication 3, **caractérisé en ce que** les moyens de réception d'une rallonge comprennent des trous ménagés dans les appendices (16) et des crochets portés par les rallonges (16-2).

5. Dispositif de protection d'un véhicule, selon la revendication 3, **caractérisé en ce que** les moyens de réception d'une rallonge comprennent des moyens de réglage (16-3) en translation de ladite rallonge (16-2) par rapport audit appendice (16).

6. Dispositif de protection d'un véhicule, selon la revendication 5, **caractérisé en ce que** les moyens de réglage (16-3) comprennent des gouttières (16-4) haute et basse, avec des crans (16-5), solidaires de chaque appendice (16) et chaque rallonge (16-2) est montée coulissante dans ces gouttières et portent également sur ses bords des crans (16-6) de profil conjugué.

7. Dispositif de protection d'un véhicule, selon la revendication 5, **caractérisé en ce que** les moyens de réglage (16-3) comprennent des gouttières (16-4) haute et basse, avec chaque rallonge (16-2) montée coulissante dans ces gouttières et portent des moyens de rappel élastique des rallonges en superposition avec chaque appendice.

8. Dispositif de protection d'un véhicule, selon l'une des revendications 5 6 ou 7, **caractérisé en ce que** chaque rallonge (16-2) comporte des limiteurs d'extension.

9. Dispositif de protection d'un véhicule, selon l'une quelconque des revendications précédentes, **caractérisé en ce qu'**il comprend des moyens de retenue en position repliée des appendices (16) par rapport au tablier central (12), afin que les appendices (16) restent en position repliée en superposition sur le tablier central (12).

10. Dispositif de protection d'un véhicule, selon la revendication 9, **caractérisé en ce que** les moyens de retenue en position repliée des appendices (16) par rapport au tablier central (12) comprennent des languettes de verrouillage.

11. Dispositif de protection d'un véhicule, selon la revendication 9, **caractérisé en ce que** les moyens de retenue en position repliée des appendices (16) par rapport au tablier central (12) comprennent des pressions.

12. Dispositif de protection d'un véhicule, selon l'une quelconque des revendications précédentes, **caractérisé en ce que** le tablier central (12) comprend une fenêtre (12-1) réalisée en un matériau transparent.

13. Dispositif de protection d'un véhicule, selon l'une quelconque des revendications précédentes, **caractérisé en ce qu'**il est réalisé en un matériau élastomère.

14. Dispositif de protection d'un véhicule, selon l'une quelconque des revendications précédentes, **caractérisé en ce que** le tablier central (12) comprend des moyens de fixation (14) comprenant des sangles (14-1) de longueur réglable, solidaires par une extrémité (14-2) dudit tablier central (12) et comportant une butée (14-3) à l'autre extrémité libre de blocage.
